# EUROPEAN PATENT SPECIFICATION

(11) **EP 4 274 788 B1**
(45) Date of publication and mention of the grant of the patent: **27.08.2025**
(21) Application number: 22700219.3
(22) Date of filing: 03.01.2022
(51) Int. Cl.: B65G 1/04

(54) **VEHICLE WITH NON-MOTORIZED GUIDING WHEELS AND MOTORIZED BELT DRIVE AND METHOD OF OPERATING THE VEHICLE**
FAHRZEUG MIT NICHT MOTORISIERTEN LENKRÄDERN UND MOTORISIERTEM RIEMENTRIEB UND VERFAHREN ZUM BETREIBEN DES FAHRZEUGS
VÉHICULE À ROUES DE GUIDAGE NON MOTORISÉES ET ENTRAÎNEMENT PAR COURROIE MOTORISÉE ET PROCÉDÉ DE FONCTIONNEMENT DU VÉHICULE

(30) Priority: 05.01.2021 NO 20210012
(43) Date of publication of application: 15.11.2023
(73) Proprietor: Autostore Technology AS, 5578 Nedre Vats (NO)
(72) Inventor: AUSTRHEIM, Trond, 5590 Etne (NO); FJELDHEIM, Ivar, 5533 HAUGESUND (NO)
(74) Representative: Kilburn & Strode LLP
(86) International application number: PCT/EP2022/050011
(87) International publication number: WO 2022/148720

(56) References cited:
- WO-A1-2019/137870
- WO-A1-2019/233632
- WO-A1-2019/238703
- AT-U1- 16 911
- CN-A- 109 867 078

## Description

### FIELD OF THE INVENTION

The present invention relates to an automated storage and retrieval system (ASRS) for storage and retrieval of containers, and in particular to a vehicle operable on a rail system of such an ASRS as well as associated methods of operating such a vehicle in performing service operations on the rail system and/or in rescuing of a container handling vehicle that have been malfunctioning or requires service.

### BACKGROUND AND PRIOR ART

WO2019/233632A1 discloses a service vehicle for movement on a rail system. The service vehicle comprises a container vehicle handling part of mechanical interaction with a container handling vehicle operating on the rail system, an operational part for controlling operations of the service vehicle and caterpillar tracks for allowing movement of the service vehicle on the rail system during operation.

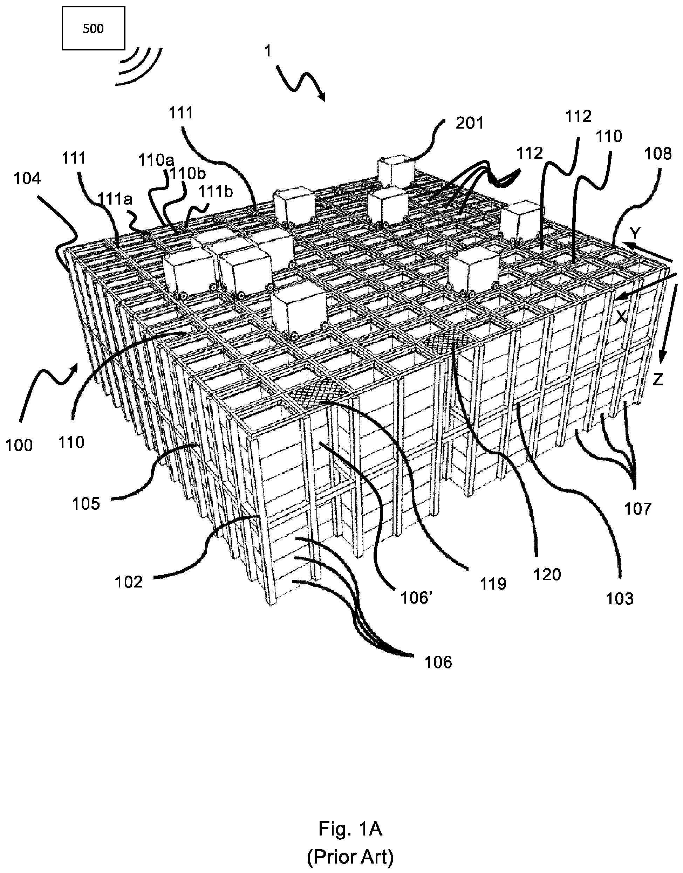

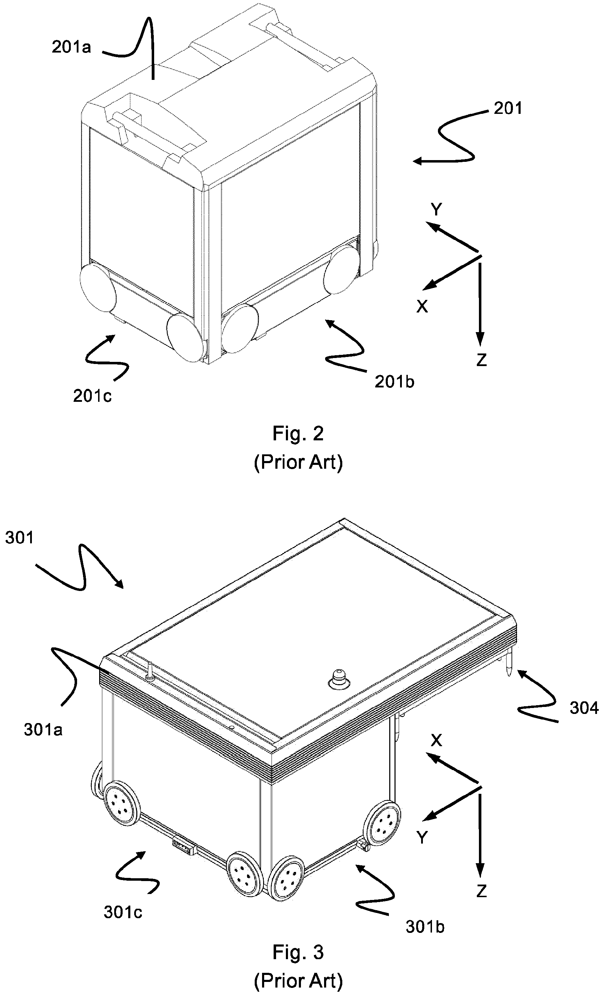

Fig. 1A discloses a typical prior art automated storage and retrieval system 1 with a framework structure 100 and Figs. 2 and 3 disclose two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 115 in the rail system 108. The container handling vehicles 201,301 can move laterally above the storage columns 105, i.e. in a plane which is parallel to the horizontal X-Y plane.

The horizontal extent of one of the grid cells 122 constituting the grid pattern is in Figs. 1A marked by thick lines.

Each grid cell 122 has a width which is typically within the interval of 30 to 150 cm, and a length which is typically within the interval of 50 to 200 cm. Each access opening 115 has a width and a length which is typically 2 to 10 cm less than the width and the length of the grid cell 122 respectively due to the horizontal extent of the rails 110,111.

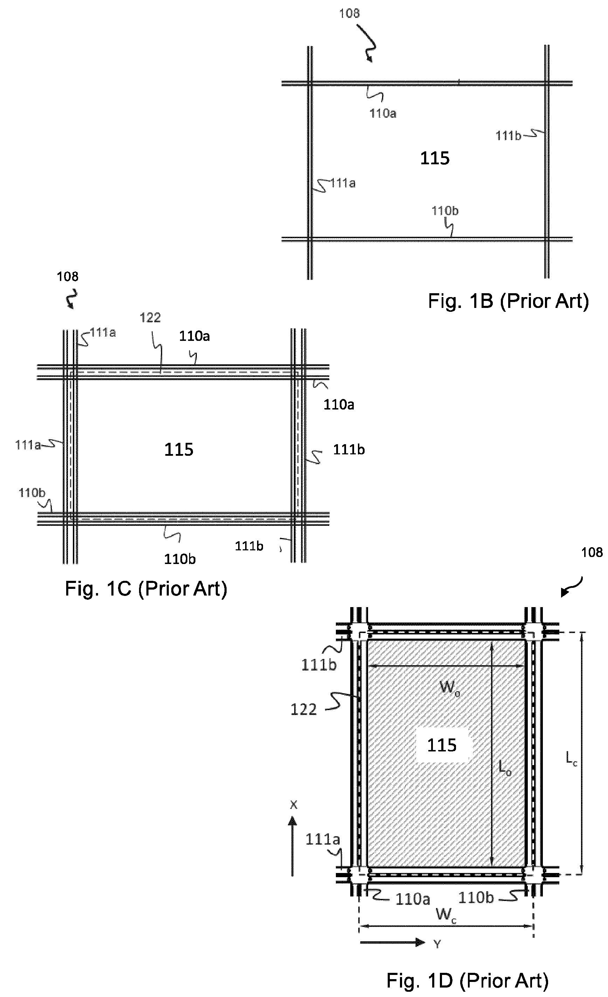

The rail system 108 may be a single rail system, as is shown in Fig. 1B. Alternatively, the rail system 108 may be a double rail system, as is shown in Fig. 1C, thus allowing a container handling vehicle 201 having a footprint generally corresponding to the lateral area defined by a storage column 105 to travel along a row of grid columns even if another container handling vehicle 201 is positioned above a grid column neighboring that row. Both the single and double rail system, or a combination comprising a single and double rail arrangement in a single rail system 108, forms a grid pattern in the horizontal plane P comprising a plurality of rectangular and uniform grid locations or grid cells 122, where each grid cell 122 comprises a grid opening 115 being delimited by a pair of rails 110a,110b of the first rails 110 and a pair of rails 111a,111b of the second set of rails 111. In Fig. 1C the grid cell 122 is indicated by a dashed box.

Consequently, rails 110a and 110b form pairs of rails defining parallel rows of grid cells running in the X direction, and rails 111a and 111b form pairs of rails defining parallel rows of grid cells running in the Y direction.

As shown in Fig. 1D, each grid cell 122 has a width *W_{c}* which is typically within the interval of 30 to 150 cm, and a length *L_{c}* which is typically within the interval of 50 to 200 cm. Each grid opening 115 has a width *Wₒ* and a length *Lₒ* which is typically 2 to 10 cm less than the width *W_{c}* and the length *L_{c}* of the grid cell 122.

In the X and Y directions, neighboring grid cells are arranged in contact with each other such that there is no space therebetween.

The upright members 102 of the framework structure 100 may be used to guide the storage containers during raising of the containers out from and lowering of the containers into the columns 105. The stacks 107 of containers 106 are typically selfsupportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 are shown in Fig. 3 indicated with reference number 304. The gripping device of the container handling device 201 is located within the vehicle body 201a in Fig. 2.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1.

Fig. 3 shows an alternative configuration of a container handling vehicle 301 with a cantilever construction. Such a vehicle is described in detail in e.g. NO3 17366.

The central cavity container handling vehicles 201 shown in Fig. 2 may have a footprint that covers an area with dimensions in the X and Y directions which is generally equal to the lateral extent of a storage column 105, e.g. as is described in WO2015/193278A1.

The term 'lateral' used herein may mean 'horizontal'.

Alternatively, the central cavity container handling vehicles 101 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304, illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1A, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1.

When a storage container 106 stored in one of the columns 105 disclosed in Fig. 1A is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle 201,301 that is subsequently used for transporting the target storage container 106 to the drop-off port column 119, or with one or a plurality of other cooperating container handling vehicles 201,301. Alternatively, or in addition, the automated storage and retrieval system 1 may have container handling vehicles 201,301 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

ASRS vehicles according to prior art are guided on rails in the first and second directions, X,Y, on the rail system and have wheel drive on at least some of the wheels. However, the traction of the drive wheels on the rails is dependent on sufficiently clean rails and wheels with minimum dust or spill, in order not to spin either during acceleration and deceleration and/or performing heavy lifting requiring good traction to be able to transport a heavy bin, operator or a container handling vehicle.

It is thus an objective of the invention to provide a vehicle with increased traction with the rail system.

WO2019/233632A1, in accordance with its abstract, discloses 'a service vehicle for movement on a rail system. The service vehicle comprises a container vehicle handling part for mechanical interacting with a container handling vehicle operating on the rail system, an operational part for controlling operations of the service vehicle and caterpillar tracks for allowing movement of the service vehicle on the rail system during operation.'

### SUMMARY OF THE INVENTION

The present invention is set forth and characterized in the independent claims, while the dependent claims describe other characteristics of the invention.

The invention relates to a vehicle for operation on an automated storage and retrieval system, the automated storage and retrieval system comprising a two-dimensional rail system comprising a first set of parallel rails arranged to guide movement of container handling vehicles in a first direction X across the top of a frame structure, and a second set of parallel rails arranged perpendicular to the first set of rails to guide movement of the container handling vehicles in a second direction Y which is perpendicular to the first direction X, where the vehicle comprises a wheeled base, wherein the wheeled base comprises:
- a first set of non-motorized guiding wheels for interaction with the rails in the first direction X and a second set of non-motorized guiding wheels for interaction with the rails in the second direction Y; and
- a first motorized belt drive arranged for frictional contact with a rail of the rail system for driving the vehicle in one of the first direction X or the second direction Y.

The combination of the non-motorized guiding wheels and motorized belt drive renders possible movement along the tracks through guidance by the guiding wheels and drive from the belt drive. The increased contact area provided by the belt drive as compared to traditional drive wheels is advantageous i.a because the risk of slip on the rail surface is reduced.

In other words, the invention relates to a vehicle with passive non-motorized guiding wheels for guidance/support and one or more belt drives which can be drive belt(s) for driving or moving the vehicle in the first and/or second directions X, Y of a rail system. The belt drive can be: 1) arranged in the same direction as the direction of travel of the vehicle and engaging tracks in the same direction, either between the wheels or in center of the vehicle, or 2) arranged in the same direction as the direction of travel of the vehicle but engaging racks arranged in a 90 degrees orientation relative the direction of travel.

The vehicle can be a service vehicle. The service vehicle may have various functions, such as e.g. used in rescuing container handling vehicles that has malfunctioned or in rail cleaning purposes etc. In addition, in service operations, increased traction may be required.

Alternatively, the vehicle can be a container handling vehicle with a container lifting device where a requirement of increased traction is of more importance than the acceleration/deceleration and maximum speed of the container handling vehicle. Such a container handling vehicle may e.g. be a container handing vehicle comprising a number of container lifting devices, where the container handling vehicle is adapted to carry multiple storage containers such that it may be a relatively heavy container handling vehicle if carrying maximum amount of storage containers. An example of a multi-bin vehicle capable of carrying multiple storage containers is described in publication WO 2019/101366 A1 (Autostore AS), the contents of which are incorporated herein by reference. Referring to e.g. Fig. 9 in WO 2019/101366 A1 it is shown a container handling vehicle with two lifting devices such that it can carry two storage containers at the same time. Further referring to Figs. 11-15 in WO 2019/101366 A1 it is shown a container handling vehicle with four lifting devices such that it can carry four storage containers at the same time.

The vehicle may further comprise a second motorized belt drive arranged for frictional contact with a rail of the rail system for driving the vehicle in the other of the first direction X or second direction Y.

The vehicle may comprise more than one belt drive in the X direction and/or more than one belt drive in the Y direction.

The wheeled base may be an assembly of wheel base units. For example, the wheeled base may comprise two identical wheel base units separated by an intermediate wheel base unit. The identical wheel base units may be mirrored relative the intermediate wheel base unit and both may comprise non-motorized guiding wheels in the first and second directions X,Y as well as first motorized belt drives in the first and second directions X,Y.

The vehicle further comprises a track shift mechanism on the wheeled base for lifting and lowering one of the sets of guiding wheels relative the other set of guiding wheels, and the track shift mechanism may comprise a mechanical linkage to lift and lower the belt drive for use with the set of guiding wheels associated with the track shift mechanism.

This mechanical linkage enables that the displacement of the set of guiding wheels and the belt drive in the same direction is synchronized. Synchronized displacement is advantageous because both the guiding wheels and the belt drive(s) in the same direction needs to be in contact with the underlying rail system in order for guided movement along the rails. Similarly, both the guiding wheels and the belt drive(s) oriented perpendicular to the driving direction of the vehicle need to be lifted up from the rails for the vehicle to be able to move in the driving direction.

If the vehicle comprises a first and a second belt drive, the track shift mechanism can be connected to the first or the second belt drive.

The vehicle may comprise a plate member connected to the mechanical linkage, and the belt drive can be mounted on the plate member such that vertical displacement of the plate member via the mechanical linkage engages and disengages the belt drive relative the rail system. The plate member allows alignment of the two pulleys wheels so that the belt drive runs parallel to the upper surface of the rail.

The vehicle may further comprise a number of pulley wheels mounted on the plate member, and the pulley wheels may have a rotational axis in a horizontal plane. The first motorized belt drive may be guided around said pulleys such that when the vehicle operates on a rail system, the belt drive runs parallel to the upper surface to the first or second set of parallel rails. The vehicle may comprise a mirrored plate member, pulley wheels and belt drive on an opposite side of the vehicle in order to provide a straight movement with reduced risk of skewed drag of the vehicle.

The vehicle may further comprise a tensioning jockey wheel mounted on the plate member. The belt drive may be guided around said tensioning jockey wheel and the pulley wheels.

The vehicle may further comprise a belt drive motor, and the belt drive motor can be mounted on the plate member.

The pulley wheels may be of the same size as the first and second sets of non-motorized guiding wheels. This ensures that the displacement per rotation is the same. In addition, this may simplify manufacturing of the parts as it could allow existing parts to be used.

The plate member, the number of pulleys, the tensioning jockey wheel, the belt drive and the belt drive motor may form a belt drive unit, i.e. the assembly of these components can form a belt drive unit.

The at least one belt drive in the first direction X and/or the at least one belt drive in the second direction Y may be arranged within a horizontal area of the wheeled base in the first direction X and the second direction Y.

In other words, the belt(s) is not extending outside the wheeled base.

A contact surface of the motorized first or second belt drive could have a length of 50% or more of a grid cell in contact with the underlying rail.

The belt drive can be profiled in order to provide a better grip on the underlying rail. In order to provide as large contact area as possible between the belt drive and the underlying rail, the belt drive preferably grip the base of the track. Alternatively, the belt drive can grip the top of the rail and/or both the base of the rail and the top of the rail.

If there is just one belt drive in the first and/or second direction X,Y, this one belt drive is preferably positioned towards the middle and under the main centre of mass of the vehicle to minimise torque and rubbing of the guiding wheels as the vehicle accelerates /decelerates.

The wheeled base may comprise an opening for receiving a container handling vehicle that has been malfunctioning or requires service.

When a malfunctioning container handling vehicle is arranged within the opening, the vehicle may encircle the container handling vehicle from at least three sides.

The opening in the vehicle thus may provide a dock within the wheeled base for receiving the container handling vehicle. In order for the opening to be able to accommodate a container handling vehicle, the size of the opening may be equal to or greater than the size of a grid cell.

The vehicle may further comprise a lifting arrangement for lifting the container handling vehicle off the rail system.

The lifting arrangement may comprise at least two lifting mechanisms arranged on opposite sides of the opening and each of the lifting mechanisms may comprise means for engaging a connection interface on the container handling vehicle when the container handling vehicle is arranged in the opening.

When engaged, the lifting mechanisms may lift the container handling vehicle off the rail system. As an alternative to a lifting arrangement comprising at least two lifting mechanisms on opposite sides of the opening, the lifting arrangement can comprise a hook, claw or similar for engaging a complementary lifting ear(s) or hook(s) on an upper surface or on any side surface(s) of the container handling vehicle.

The vehicle may comprise a platform for supporting a container handling vehicle from below.

When the container handling vehicle has been lifted using the lifting mechanisms, it may be positioned on the platform of the vehicle for maintenance and/or repair on site or at a service area off the rail system where the container handling vehicles operate.

The vehicle may comprise a cleaning arrangement comprising at least one cleaning device for cleaning the rails in the first direction X or the second direction Y.

The cleaning arrangement may be a vacuum cleaner, scrub, spray device etc. suitable for cleaning the rails. The cleaning arrangement can be positioned on the wheeled base, possibly between the guiding wheels or in a center of the wheel base if the wheeled base covers 2 or more grid cells. The cleaning arrangement may comprise cleaning devices in the first direction X and/or in the second direction Y. Alternatively, the cleaning device can be arranged on top of the wheel base and be operated automatically or manually by an operator.

The vehicle may further comprise a ride-on device for transporting an operator. The ride-on device may be a chair.

The vehicle may comprise communication means for communication with a control system.

The control system is preferably the same control system that the container handling vehicles operate under, such that the vehicle is added to the control system as a normal container handling vehicle thereby minimizing the risk of collision with the other container handling vehicles on the rail system.

It is further described an automated storage and retrieval system comprising a two-dimensional rail system comprising a first set of parallel rails arranged to guide movement of container handling vehicles in a first direction X across the top of a frame structure, and a second set of parallel rails arranged perpendicular to the first set of rails to guide movement of the container handling vehicles in a second direction which is perpendicular to the first direction, wherein the automated storage and retrieval system further comprises a number of container handling vehicles and at least one vehicle as defined above.

It is further described a method of moving a vehicle as defined above on a rail system of an automated storage and retrieval system, wherein the method comprises using the belt drive to drive the vehicle and the first and second sets of non-motorized guiding wheels for guiding the vehicle on the rail system.

It is further described a method of cleaning a rail system using a vehicle as defined above, wherein the vehicle comprises a cleaning device.

It is further described a method of rescuing a malfunctioning container handling vehicle using a vehicle as defined above, wherein the vehicle comprises a lifting arrangement for lifting the malfunctioning container handling vehicle off the rail system.

The relative terms "upper", "lower", "below", "above", "higher" etc. shall be understood in their normal sense and as seen in a cartesian coordinate system.

Summarized, the invention provides a vehicle with increased traction against the underlying rail system in that wheels are used for guiding and belt drive is used for movement of the vehicle.

### BRIEF DESCRIPTION OF THE DRAWINGS

Following drawings are appended to facilitate the understanding of the invention. The drawings show embodiments of the invention, which will now be described by way of example only, where:
Figs. 1A-1D illustrate aspects of prior art storage and retrieval systems, where: Fig. 1A is a perspective view of a framework structure of a prior art automated storage and retrieval system; Fig. 1B is a plan view of two sets of single track rails; Fig. 1C is a plan view of two sets of double track rails; and Fig. 1D is a plan view showing dimensions of a single grid cell;
Fig. 2 is a perspective view of a prior art container handling vehicle having a centrally arranged cavity for carrying storage containers therein;
Fig. 3 is a perspective view of a prior art container handling vehicle having a cantilever for carrying storage containers underneath;
Figs. 4A-4E show an example of a vehicle in the form of a service vehicle with a lifting mechanism for engaging and supporting a malfunctioning container handling vehicle with a cantilever section, and wherein the lifting mechanism is arranged for engaging the container handling vehicle at a connection point or surface in a lower portion of the cantilever section;
Figs. 5A-5D show an example of a vehicle in the form of a service vehicle with a lifting mechanism for engaging and supporting a malfunctioning container handling vehicle with a cantilever section, and wherein the lifting mechanism is arranged for engaging the container handling vehicle at a connection point or surface in an upper portion or above the cantilever section;
Figs. 6A-6C show details of a single wheel base unit which can form part of wheeled base of the vehicle;
Figs. 7A-7B show top views of a vehicle in the form of a cleaning vehicle where the vehicle body has been omitted on purpose, the vehicle having cleaning devices for cleaning the rails in the first direction X and the second direction Y;

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3, i.e. a number of upright members 102 and a number of horizontal members 103, which are supported by the upright members 102, and further that the framework structure 100 comprises a first, upper rail system 108 in the X direction and Y direction.

The framework structure 100 further comprises storage compartments in the form of storage columns 105 provided between the members 102, 103, where storage containers 106 are stackable in stacks 107 within the storage columns 105.

The framework structure 100 can be of any size. In particular it is understood that the framework structure can be considerably wider and/or longer and/or deeper than disclosed in Fig. 1A. For example, the framework structure 100 may have a horizontal extent of more than 700x700 columns and a storage depth of more than twelve containers.

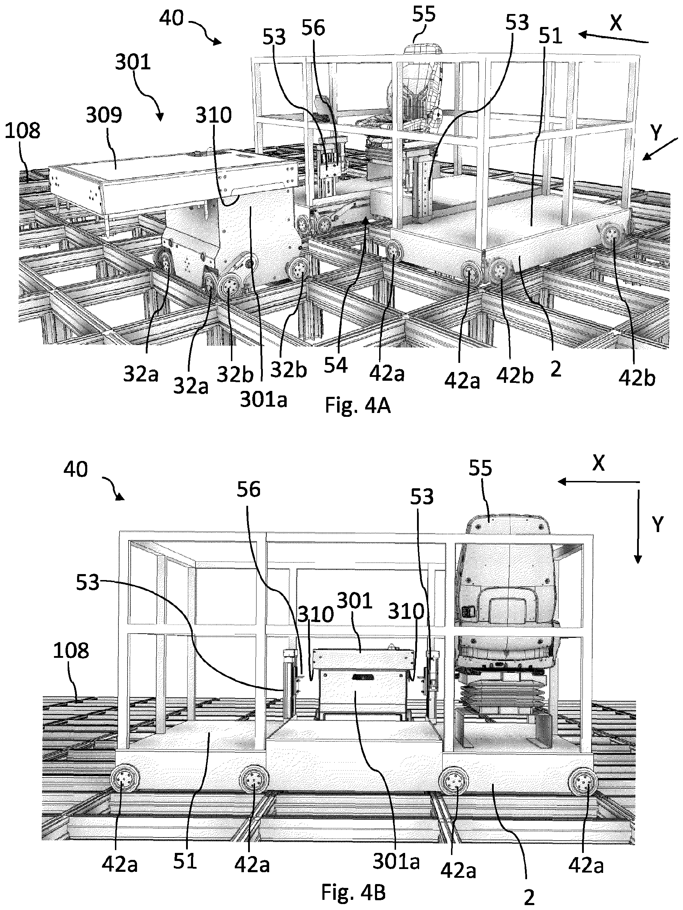

Figs. 4A-4E show an example of a vehicle 40 in the form of a service vehicle 40 with a lifting mechanism for engaging and supporting a malfunctioning container handling vehicle 301 with a cantilever section 309. The lifting mechanism 53 is arranged for engaging the container handling vehicle 301 at a connection point or surface 310 in a lower portion of the cantilever section 309 such as to lift the container handling vehicle 301 off the rail system 108.

In Figs. 4A-4E the connection point or surface 310 is arranged on an underside of the cantilever section 309 of the container handling vehicle 301. The container handling vehicle 301 comprises a wheel arrangement comprising a first set of wheels 32a for driving the vehicle 301 in the first direction X and a wheel arrangement comprising a second set of wheels 32b for driving the vehicle 301 in the second direction Y on the rail system 108.

The vehicle 40 of Figs. 4A-4E comprises a wheeled base 2 comprising a first set of non-motorized guiding wheels 42a for interaction with the rails 110a,b in the first direction X and a second set of non-motorized guiding wheels 42b for interaction with the rails 111a,b in the second direction Y. The wheeled base 2 is shown with an opening 54 for receiving the container handling vehicle 301. The container handling vehicle 301 may be malfunctioning or require service.

The lifting arrangement is disclosed with two lifting mechanisms 53 arranged on opposite sides of the opening 54. Each of the lifting mechanisms 53 comprises means for engaging the container handling vehicle 301 when the container handling vehicle 301 is arranged in the opening 54. The means for engaging the container handling vehicle 301 may be a support rib 56 or shoulder for contacting the connection interface 310 on the underside of the cantilever section 309. The lifting arrangement may comprise an actuator, rack and pinion arrangement or other known hoisting mechanism known to the skilled person to raise and lower the support rib 56 relative the wheeled base 2.

As is shown in Fig. 4A, the opening 54 is formed by three sides of the wheeled base 2 such that when a malfunctioning container handling vehicle 301 is arranged within the opening, the vehicle 40 encircles the container handling vehicle 301 from three sides.

The vehicle 40 is disclosed with a ride-on device 55 for transporting an operator.

The vehicle 40 is disclosed with a platform 51 for supporting a container handling vehicle 301 from below. An operator may move the container handling vehicle 31 between the lifting arrangement and the platform 51. Alternatively, a dedicated lift (not shown) can be arranged to move the container handling vehicle 31 between the lifting arrangement and the platform 51.

Referring to Fig. 4A a perspective view of the service vehicle 40 and the container handling vehicle 301 is shown. No container handling vehicle 301 is arranged within the opening 54. In this figure, the container handling vehicle 301 has malfunctioned and the service vehicle 40 has been positioned in a cell close to the container handling vehicle 301. The opening 54 is oriented in a direction towards a back of the container handling vehicle 301 such that the container handling vehicle 301 can be encircled once the service vehicle 40 moves closer in the second direction Y towards the container handling vehicle 301.

Referring to Fig. 4B, the relative positions of the vehicle 40 and the container handling vehicle 301 are similar to Fig. 4B, however in Fig. 4B it is shown a side view from behind the vehicle 40.

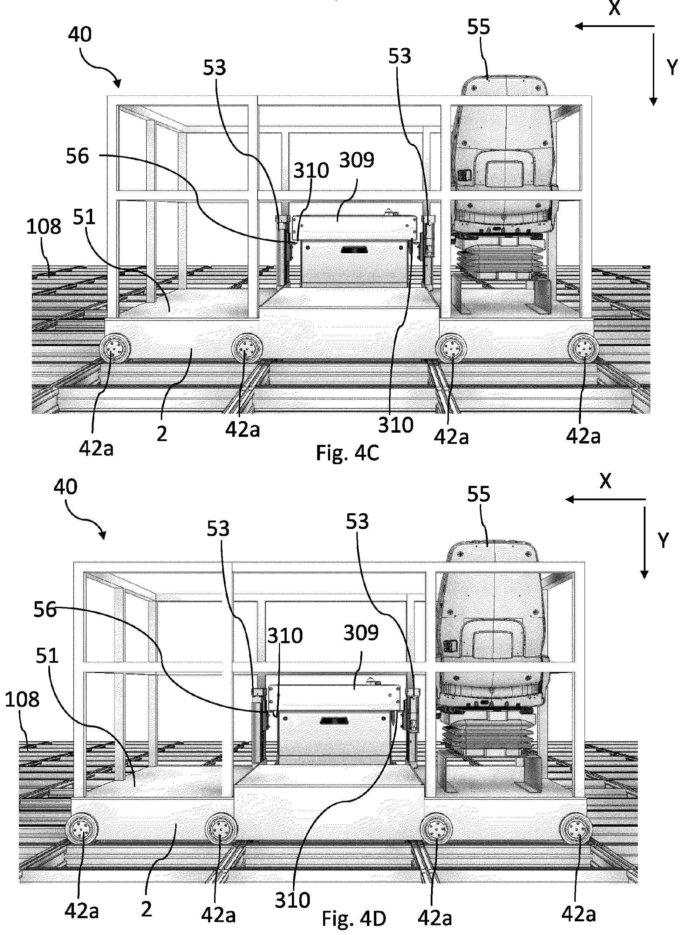

In Fig. 4C a similar view as in Fig. 4B is shown, however in Fig. 4C the container handling vehicle 301 is positioned within the opening 54 of the wheeled base 2. Fig. 4C shows more details of the lifting mechanism 53 and the support ribs 56 relative the connection interface 310 on the underside of the cantilever section 309 of the container handling vehicle 301. The vehicle body 301a of the container handling vehicle 301 has a smaller extent in the first direction X than the cantilever section 309. The distance between the support ribs 56 is larger than the extent of the vehicle body 301 but smaller than the extent of the cantilever section 309. In particular, as is seen in Fig. 4B, the two support ribs 56 on the opposite sides of the opening 54 are arranged in such a distance that the vehicle body 301a of the container handling vehicle 301 may enter, i.e. the distance in the first direction X between the support ribs 56 is greater than the extent of the vehicle body 301 in the first direction X. Furthermore, the cantilever section 309 has a greater extent in the first direction X than the distance between the support ribs 56 such that if the support ribs 56 are raised, they will engage the underside of the cantilever section 309 such that the container handling vehicle 301 can be lifted off the rail system 108.

Fig. 4D is a similar view as Fig. 4C, however in Fig. 4D the container handling vehicle 301 has been lifted off the rail system 108 using the lifting mechanism 53.

As seen in the Figure, the support ribs 56 are arranged in contact with the underside 310 of the cantilever section 309.

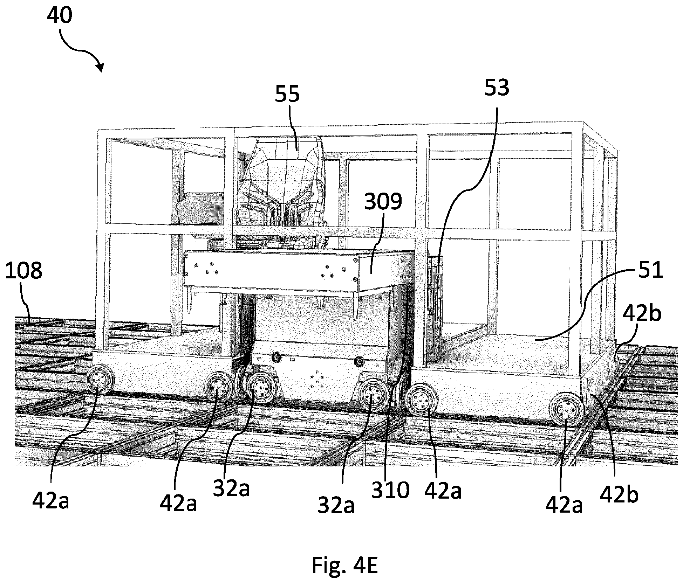

Fig. 4E is a perspective view from the opposite side of Fig. 4D showing that the container handling vehicle 301 has been lifted off the rail system 108.

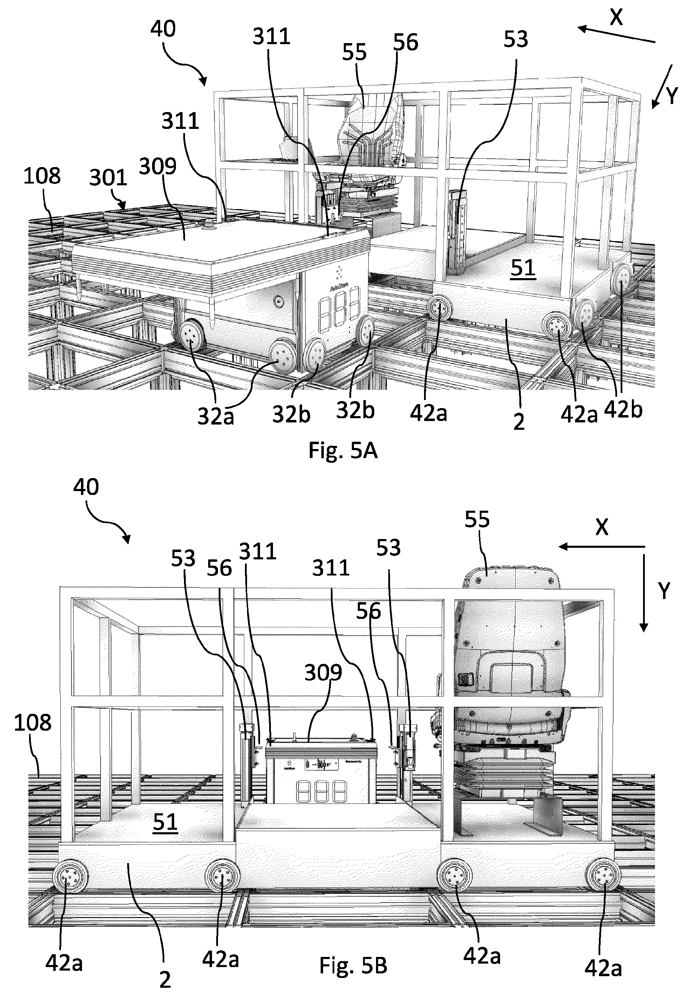

Figs. 5A-5D show an example of a vehicle 40 in the form of a service vehicle 40 with a lifting mechanism 53 for engaging and supporting a malfunctioning container handling vehicle 301 with a cantilever section 309, and wherein the lifting mechanism is arranged for engaging the container handling vehicle 301 at a connection point or surface 311 in an upper portion or above the cantilever section 309.

Similar to the solution in Figs. 4A-4E, the lifting arrangement is disclosed with two lifting mechanisms 53 arranged on opposite sides of the opening 54. Each of the lifting mechanisms 53 comprises means for engaging the container handling vehicle 301 when the container handling vehicle 301 is arranged in the opening 54. The means for engaging the container handling vehicle 301 may be a support rib 56 or shoulder for contacting the connection interface 310 on the underside of the cantilever section 309. The lifting arrangement may comprise an actuator, rack and pinion arrangement or other known hoisting mechanism known to the skilled person to raise and lower the support rib 56 relative the wheeled base 2. The only difference between the service vehicle 40 of Figs. 5A-5D compared to the service vehicle 40 of Figs. 4A-4E is that the support ribs 56 of the service vehicle 40 in Figs 5A-5D are configured to engage a connection interface 311 on or above the cantilever section 309 of the container handling vehicle 301. This is due to the that the extent of the vehicle body 301a and the cantilever section 308 is equal or near equal such that the construction of container handling vehicle 301 does not provide a suitable connection interface 311 for engagement with the support ribs 56 of the lifting mechanism 53. The connection interface 311 extends beyond the vertical projection of the cantilever section 309 and can be a plate or rib connected to an upper surface of the cantilever section 309 or it can be formed as an integral part of the cantilever section 309.

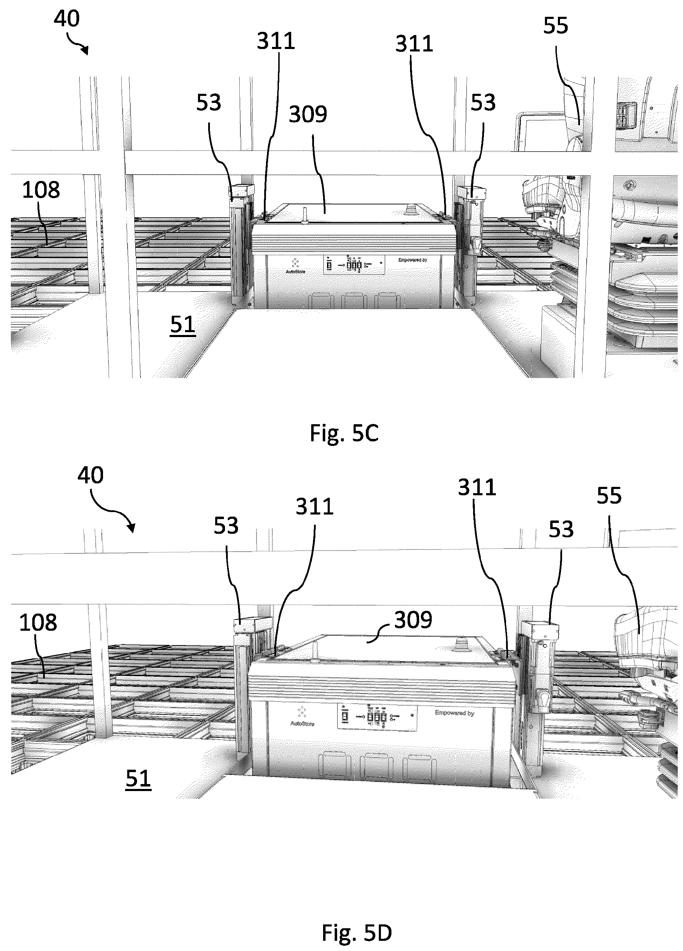

Fig. 5A is analogue o Fig. 4A, Fig. 5B is analogue to Fig. 4B, Fig. 5C is analogue to Fig. 4C and Fig. 5D is analogue to Fig. 4D and will not be described in greater detail herein.

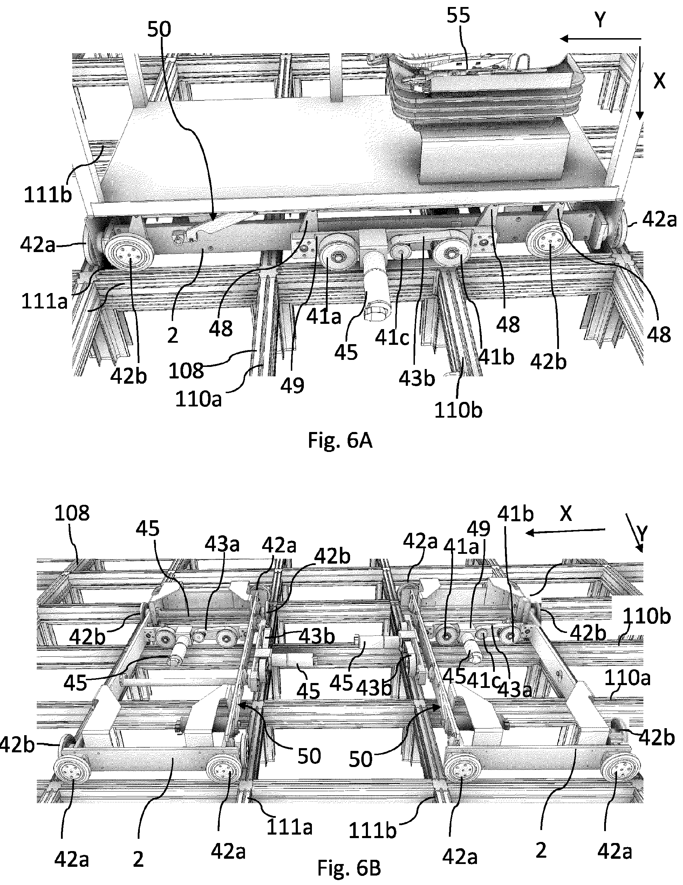

Figs. 6A-6C show details of a single wheel base unit which can form part of wheeled base 2 of the vehicle 40 shown in Figs. 4A-4E and 5A-5D.

In Fig. 6A, the wheel base unit is an example of the wheel base unit on the left hand side of e.g. Figs. 4A and 5A. It is shown a potential setup of the track shift mechanism 50 for the wheels. The track shift mechanism 50 is arranged on the wheeled base 2 for lifting and lowering the second set of guiding wheels 42b relative the first set of guiding wheels 42a. The track shift mechanism 50 comprises a mechanical linkage or rocker 48 to lift and lower the belt drive 43b for use with the second set of guiding wheels 42b associated with the track shift mechanism 50. The vehicle 40, i.e. the wheeled base 2, is disclosed with a plate member 49 connected to the mechanical linkage 48. The second motorized belt drive 43b is mounted on the plate member 49 such that vertical displacement of the plate member 49 via the mechanical linkage 48 engages and disengages the belt drive 43b relative the rail system 108 when the second set of guiding wheels is engaged and disengaged relative the rail system 108. It is further disclosed a number of pulley wheels 41a,41b mounted on the plate member 49. The pulley wheels 41a,41b have a rotational axis in a horizontal plane and the motorized belt drive 43b is guided around said pulleys 41a,41b such that when the vehicle 40 operates on a rail system 108, the belt drive 43b runs parallel to the upper surface to the first or second set of parallel rails 111a,b. As shown in Fig. 6A, the pulley wheels 41a,41b are shown to be of the same size as the second set of non-motorized guiding wheels 42b.

It is further disclosed a tensioning jockey wheel 41c mounted on the plate member 49. The belt drive 43b is guided around said tensioning jockey wheel 41c and the pulley wheels 41a,41b.

It is also disclosed a belt drive motor 45 for driving the belt drive 43b, the belt drive motor 45 is mounted on the plate member 49.

All components mounted on the plate member 49 may form a belt drive unit, i.e. the plate member 49, the number of pulleys 41a,41b, the tensioning jockey wheel 41c, the belt drive 43b and the belt drive motor 45.

A similar arrangement of a belt drive unit may be provided for driving the vehicle 40 in the perpendicular direction along the first set of rails 110a,b (see e.g. Fig. 6B). As shown in Fig. 6B it is disclosed a plate member 49 that may form part of a belt drive unit, i.e. the plate member 49, the number of pulleys 41a,41b, the tensioning jockey wheel 41c, the belt drive 43a and the belt drive motor 45. Further referring to Fig. 6B, it is disclosed two wheel base units. The wheeled base 2 may, as illustrated in Fig. 6B comprise two identical wheel base units. The identical wheel base units may be separated by an intermediate wheel base unit (not shown in Fig. 6B). The identical wheel base units may be mirrored relative the intermediate wheel base unit and both wheel base units may comprise non-motorized guiding wheels 42a,42b in the first and second directions X,Y as well as first motorized belt drives 41a,41b in the first and second directions X,Y.

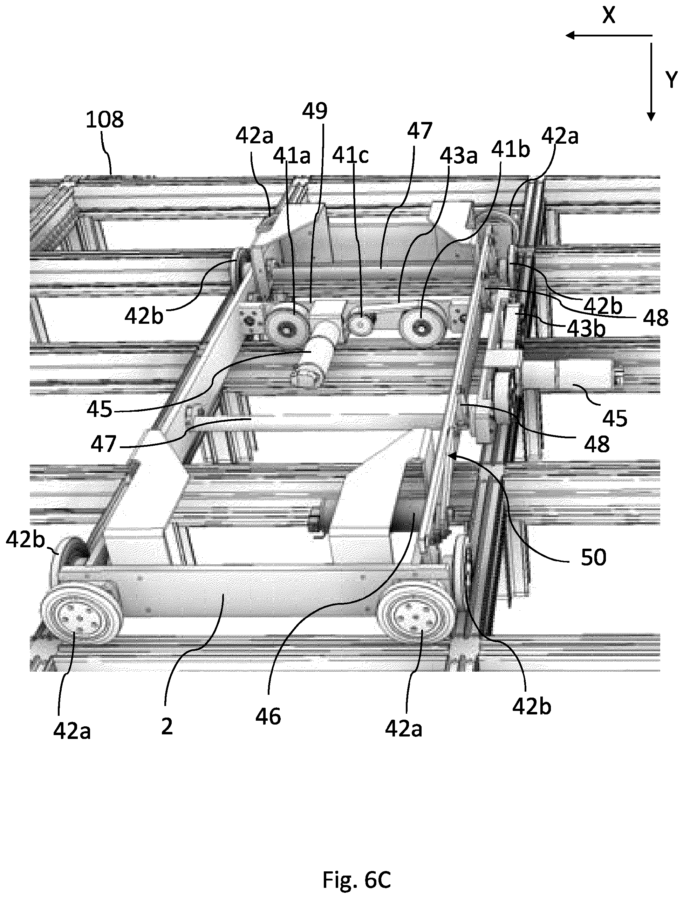

Fig. 6C is an enlarged view of wheel base unit on the left hand side in Fig 6B and show some more details of the belt drive unit as well as a wheel shaft 47 connected to the track shift mechanism 50 for synchronous trackshift of both wheels connected to the wheel shaft 47. This setup ensures synchronous operation of the track shift mechanism 50 of all wheels in the same second direction Y and the belt drive 43b.

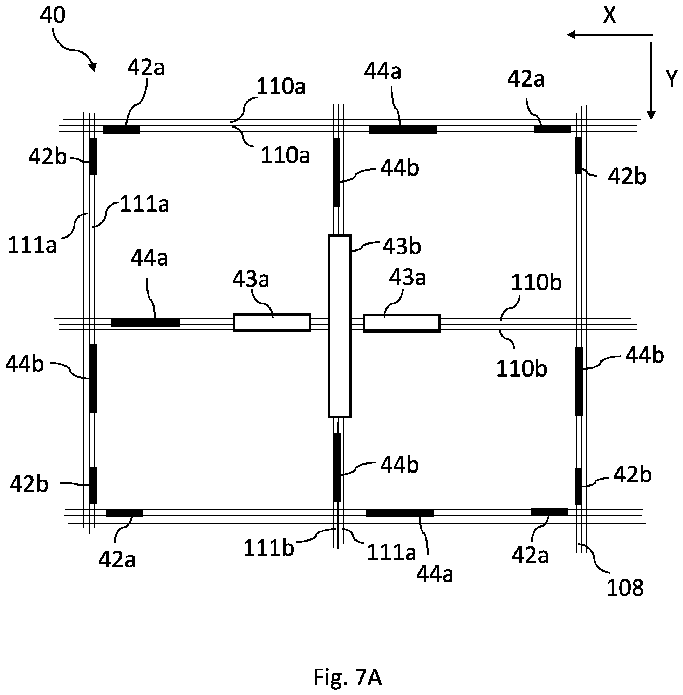

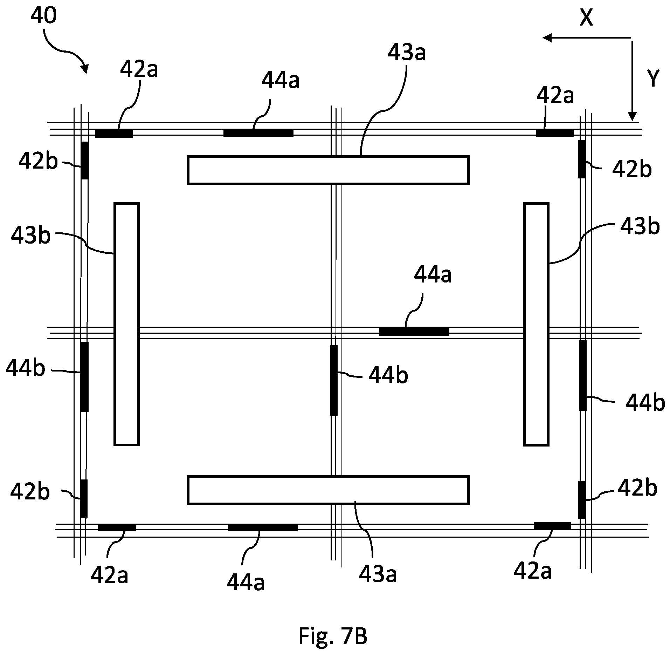

Figs. 7A-7B show top views of a vehicle 40 in the form of a cleaning vehicle 40 where the vehicle body has been omitted on purpose, the vehicle 40 having cleaning devices for cleaning the rails in the first direction X and the second direction Y. The cleaning vehicle 40 is shown covering 2x2 cells, i.e. four cells in total. The setup of the cleaning vehicles 40 in Figs. 7A and 7B are similar, except for the fact that: in Fig. 7A the belt drives 43a,43b are arranged in the same direction as the direction of travel of the vehicle 40 and engages rails 110a,110b,111a,111b in the same direction, whereas in Fig. 7B the belt drives 43a,43b are arranged in the same direction as the direction of travel of the vehicle 40 but engages rails 110a,110b,110a,111 arranged in a 90 degrees orientation relative the direction of travel. The extent of the belt drives 43a,43b of Fig. 7B shall at least be equal to or greater than the distance between neighboring rails 110a,11b; 111a,11b in the same direction, respectively.

In Fig. 7A, it is two first motorized belt drives 43a in the first direction X whereas there is one second motorized belt drive 43b in the second direction Y. This is due to the fact that both belt drives 43a,43b cannot be arranged in the very centre of the vehicle 40 as the vehicle 40 would not be able to move. Therefore, the belt drive 43a in the first direction X has been split into two belt drives 43a one each side of the second motorized belt drive 43b. In this embodiment it is advantageous to provide the track shift mechanism 50 on the second sets of wheels 42b and consequently on the second motorized belt drive 43b such that one does not have to lift and lower both of the first motorized belt drives 43a.

The belt drives 43a, 43b in Fig. 7A are positioned towards the middle and under the main centre of mass of the vehicle 40 to minimise torque and rubbing of the guiding wheels 42a,42b as the vehicle accelerates /decelerates.

The cleaning vehicle 40 in both Figs. 7A and 7B is disclosed with a cleaning arrangement comprising a cleaning device 44a for cleaning the rails 110a,110b in the first direction X and a cleaning device 44b for cleaning the rails 111a,11b in the second direction Y. The cleaning devices 44a are for cleaning the rails 110a,b in the first direction X whereas the cleaning devices 44b are for cleaning the rails 111a,b in the second direction Y. The cleaning devices 44a,44b are shown as being positioned between the wheels 43a,43b and in the center of the cleaning vehicle 40 for cleaning all covered rails 110a,b;111a,b in the direction of travel.

The rail system shown in Figs. 4A - Fig. 7B is a double rail system.

In the preceding description, various aspects of the vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. For example, the vehicles may have other structural configurations than in Figs. 4-7. In addition, all of the vehicles 40 in Figs. 4A-7B may comprise communication means for communication with a control system 500. Various modifications and variations of the illustrative embodiment, as well as other embodiments of the system, which are apparent to persons skilled in the art to which the disclosed subject matter pertains, are deemed to lie within the scope of the present invention as defined in the attached claims.

### LIST OF REFERENCE NUMBERS

- 1: Prior art automated storage and retrieval system
- 2: Wheeled base
- 32a: Wheel arrangement, first set of wheels
- 32b: Wheel arrangement, second set of wheels
- 40: Vehicle
- 41a,41b: Pulley wheel
- 41c: Jockey wheel
- 42a: Non-motorized wheels, first set of wheels
- 42b: Non-motorized wheels, first set of wheels
- 43a: First motorized belt drive, first direction X
- 43b: Second motorized belt drive, second direction Y
- 44a: Cleaning device in first direction X
- 44b: Cleaning device in second direction Y
- 45: Belt drive motor
- 46: Track shift motor
- 47: Wheel shaft
- 48: Mechanical linkage/rocker
- 49: Plate member
- 50: Track shift mechanism wheels/ Movement transferring system
- 51: Platform
- 53: Lifting mechanism
- 54: Opening
- 55: Ride-on device, chair
- 56: Support rib
- 100: Framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Parallel rails in first direction (X)
- 110a: First rail in first direction (X)
- 110b: Second rail in first direction (X)
- 111: Parallel rail in second direction (Y)
- 111a: First rail of second direction (Y)
- 111b: Second rail of second direction (Y)
- 112: Access opening
- 119: First port column
- 120: Second port column
- 201: Prior art storage container vehicle
- 201a: Vehicle body of the storage container vehicle 201
- 201b: Drive means / wheel arrangement, first direction (X)
- 201c: Drive means / wheel arrangement, second direction (Y)
- 301: Prior art cantilever storage container vehicle
- 301a: Vehicle body of the storage container vehicle 301
- 301b: Drive means in first direction (X)
- 301c: Drive means in second direction (Y)
- 304: Gripping device
- 309: Cantilever section
- 310: Connection interface below cantilever section
- 311: Connection interface on/above cantilever section
- X: First direction
- Y: Second direction
- Z: Third direction

## Claims

1. A vehicle (40) for operation on an automated storage and retrieval system (1), the automated storage and retrieval system (1) comprising a two-dimensional rail system (108) comprising a first set of parallel rails (110a,b) arranged to guide movement of container handling vehicles (301) in a first direction (X) across the top of a frame structure (100), and a second set of parallel rails (111a,b) arranged perpendicular to the first set of rails (110a,b) to guide movement of the container handling vehicles (301) in a second direction (Y) which is perpendicular to the first direction (X), where the vehicle (40) comprises a wheeled base (2), wherein the wheeled base comprises:
- a first set of non-motorized guiding wheels (42a) for interaction with the rails (110a,b) in the first direction (X) and a second set of non-motorized guiding wheels (42b) for interaction with the rails (111a,b) in the second direction (Y); and
- a first motorized belt drive (43a) arranged for frictional contact with a rail (110a,b, 111a,b) of the rail system (108) for driving the vehicle (40) in either one of the first direction (X) or the second direction (Y) **characterised in that** it further comprises a track shift mechanism (50) on the wheeled base (2) for lifting and lowering one of the sets of guiding wheels (42a,42b) relative the other set of guiding wheels (42b,42a), and wherein the track shift mechanism (50) comprises a mechanical linkage (48) to lift and lower the belt drive (43a,43b) for use with the set of guiding wheels (42a,42b) associated with the track shift mechanism (50).

2. The vehicle (40) according to claim 1, further comprising a second motorized belt drive (43b) arranged for frictional contact with a rail (110a,b, 111a,b) of the rail system (108) for driving the vehicle (40) in the other of the first direction (X) or second direction (Y).

3. The vehicle (40) according to claim 1 or 2, wherein the vehicle comprises a plate member (49) connected to the mechanical linkage (48), and wherein the belt drive (43a,43b) is mounted on the plate member (49) such that vertical displacement of the plate member (49) via the mechanical linkage (48) engages and disengages the belt drive (43a,43b) relative the rail system (108).

4. The vehicle (40) according to claim 3, further comprising a number of pulley wheels (41a,41b) mounted on the plate member (49), wherein the pulley wheels (41a,41b) have a rotational axis in a horizontal plane, and wherein the first motorized belt drive (43a,43b) is guided around said pulleys (41a,41b), such that when the vehicle (40) operates on a rail system (108), the belt drive (43a,43b) runs parallel to the upper surface to the first or second set of parallel rails (110a,b;111a,b).

5. The vehicle (40) according to claim 4, wherein the vehicle (40) further comprises a tensioning jockey wheel (41c) mounted on the plate member (49), and wherein the belt drive (43a,43b) is guided around said tensioning jockey wheel (41c) and the pulley wheels (41a,41b).

6. The vehicle (40) according to claim 4 or 5, wherein the vehicle (40) further comprises a belt drive motor (45), and wherein the belt drive motor (45) is mounted on the plate member (49).

7. The vehicle (40) according to any of the preceding claims 4-6, wherein the number of pulley wheels (41a,41b) are of the same size as the first and second sets of non-motorized guiding wheels (42a,42b).

8. The vehicle (40) according to any of the preceding claims 4-7, wherein the plate member (49), the number of pulley wheels (41a,41b), the tensioning jockey wheel (41c), the belt drive (43a,43b) and the belt drive motor (45) form a belt drive unit.

9. The vehicle (40) according to claim 2, wherein the at least one belt drive (43a) in the first direction (X) and/or the at least one belt drive (43b) in the second direction (Y) are arranged within a horizontal area of the wheeled base (2) in the first direction (X) and the second direction (Y).

10. The vehicle (40) according to any of the preceding claims, wherein the wheeled base (2) comprises an opening (54) for receiving a container handling vehicle (301) that has been malfunctioning or requires service, and optionally, when a malfunctioning container handling vehicle (301) is arranged within the opening, the vehicle (40) encircles the container handling vehicle (301) from at least three sides.

11. The vehicle (40) according to any of claims 9, further comprising a lifting arrangement for lifting the container handling vehicle (301) off the rail system (108), optionally, wherein the lifting arrangement comprises at least two lifting mechanisms (53) arranged on opposite sides of the opening (54) and wherein each of the lifting mechanisms (54) comprises means for engaging a connection interface (310,311) the container handling vehicle (301) when the container handling vehicle (301) is arranged in the opening (54).

12. The vehicle (40) according to any of the preceding claims, wherein the vehicle (40) comprises a cleaning arrangement comprising at least one cleaning device (44a,44b) for cleaning the rails (110a,b, 111a,b) in the first direction (X) or the second direction (Y).

13. The vehicle (40) according to any of the preceding claims, wherein the vehicle (40) comprises communication means for communication with a control system (500).

14. An automated storage and retrieval system comprising a two-dimensional rail system comprising a first set of parallel rails arranged to guide movement of container handling vehicles in a first direction X across the top of a frame structure, and a second set of parallel rails arranged perpendicular to the first set of rails to guide movement of the container handling vehicles in a second direction which is perpendicular to the first direction, wherein the automated storage and retrieval system further comprises a number of container handling vehicles (301) and at least one vehicle (40) according to any of the preceding claims 1-13.

15. Method of moving a vehicle according to any of the preceding claims 1-13 on a rail system of an automated storage and retrieval system, wherein the method comprises using the belt drive to drive the vehicle and the first and second sets of non-motorized guiding wheels (42a, 42b) for guiding the vehicle on the rail system (108).

## Patentansprüche

1. Fahrzeug (40) zum Betrieb auf einem automatisierten Ein- und Auslagersystem (1), wobei das automatisierte Ein- und Auslagersystem (1) ein zweidimensionales Schienensystem (108) umfasst, das einen ersten Satz paralleler Schienen (110a,b), die dazu angeordnet sind, eine Bewegung von Behälterhandhabungsfahrzeugen (301) in einer ersten Richtung (X) über die Oberseite einer Rahmenstruktur (100) zu führen, und einen zweiten Satz paralleler Schienen (111a,b) umfasst, die senkrecht zu dem ersten Satz Schienen (110a,b) angeordnet sind, um eine Bewegung der Behälterhandhabungsfahrzeuge (301) in einer senkrecht zu der ersten Richtung (X) verlaufenden zweiten Richtung (Y) zu führen, wobei das Fahrzeug (40) eine Radbasis (2) umfasst, wobei die Radbasis Folgendes umfasst:
- einen ersten Satz nicht motorisierter Führungsräder (42a) zum Zusammenwirken mit den Schienen (110a,b) in der ersten Richtung (X) und einen zweiten Satz nicht motorisierter Führungsrädern (42b) zum Zusammenwirken mit den Schienen (111a,b) in der zweiten Richtung (Y), und
- einen ersten motorisierten Riemenantrieb (43a), der für einen Reibkontakt mit einer Schiene (110a,b, 111a,b) des Schienensystems (108) zum Antreiben des Fahrzeugs (40) entweder in der ersten Richtung (X) oder der zweiten Richtung (Y) angeordnet ist, **dadurch gekennzeichnet, dass** es ferner einen Spurverschiebemechanismus (50) auf der Radbasis (2) zum Anheben und Absenken eines der Sätze Führungsräder (42a, 42b) bezüglich des anderen Satzes Führungsräder (42b, 42a) umfasst und wobei der Spurverschiebemechanismus (50) ein mechanisches Gestänge (48) zum Anheben und Absenken des Riemenantriebs (43a, 43b) zur Verwendung mit dem Satz Führungsräder (42a, 42b) umfasst, die dem Spurverschiebemechanismus (50) zugeordnet sind.

2. Fahrzeug (40) nach Anspruch 1, ferner umfassend einen zweiten motorisierten Riemenantrieb (43b) umfasst, der zum Reibkontakt mit einer Schiene (110a,b, 111a,b) des Schienensystems (108) zum Antreiben des Fahrzeugs (40) in der anderen der ersten Richtung (X) oder der zweiten Richtung (Y) angeordnet ist.

3. Fahrzeug (40) nach Anspruch 1 oder 2, wobei das Fahrzeug ein Plattenglied (49) umfasst, das mit dem mechanischen Gestänge (48) verbunden ist, und wobei der Riemenantrieb (43a, 43b) an dem Plattenglied (49) montiert ist, so dass der Riemenantrieb (43a, 43b) durch eine vertikale Verschiebung des Plattenglieds (49) über das mechanische Gestänge (48) bezüglich des Schienensystems (108) in Eingriff genommen und ausgerückt wird.

4. Fahrzeug (40) nach Anspruch 3, ferner umfassend eine Anzahl von Riemenscheiben (41a, 41b), die an dem Plattenglied (49) montiert sind, wobei die Riemenscheiben (41a, 41b) eine Drehachse in einer horizontalen Ebene aufweisen, und wobei der erste motorisierte Riemenantrieb (43a, 43b) um die Riemenscheiben (41a, 41b) herum geführt ist, so dass der Riemenantrieb (43a, 43b) parallel zu der oberen Fläche zu dem ersten oder dem zweiten Satz paralleler Schienen (110a,b; 111a,b) verläuft, wenn das Fahrzeug (40) auf einem Schienensystem (108) in Betrieb ist.

5. Fahrzeug (40) nach Anspruch 4, wobei das Fahrzeug (40) ferner ein Spannstützrad (41c) umfasst, das an dem Plattenglied (49) montiert ist, und wobei der Riemenantrieb (43a, 43b) um das Spannstützrad (41c) und die Riemenscheiben (41a, 41b) herum geführt ist.

6. Fahrzeug (40) nach Anspruch 4 oder 5, wobei das Fahrzeug (40) ferner einen Riemenantriebsmotor (45) umfasst und wobei der Riemenantriebsmotor (45) an dem Plattenglied (49) montiert ist.

7. Fahrzeug (40) nach einem der vorhergehenden Ansprüche 4 - 6, wobei die Anzahl von Riemenscheiben (41a, 41b) der des ersten und des zweiten Satzes nicht motorisierter Führungsräder (42a, 42b) entspricht.

8. Fahrzeug (40) nach einem der vorhergehenden Ansprüche 4 - 7, wobei das Plattenglied (49), die Anzahl von Riemenscheiben (41a, 41b), das Spannstützrad (41c), der Riemenantrieb (43a, 43b) und der Riemenantriebsmotor (45) eine Riemenantriebseinheit bilden.

9. Fahrzeug (40) nach Anspruch 2, wobei der mindestens eine Riemenantrieb (43a) in der ersten Richtung (X) und/oder der mindestens eine Riemenantrieb (43b) in der zweiten Richtung (Y) innerhalb eines horizontalen Bereichs der Radbasis (2) in der ersten Richtung (X) und der zweiten Richtung (Y) angeordnet sind.

10. Fahrzeug (40) nach einem der vorhergehenden Ansprüche, wobei die Radbasis (2) eine Öffnung (54) zum Aufnehmen eines Behälterhandhabungsfahrzeugs (301) umfasst, das fehlerhaft ist oder gewartet werden muss, und optional das Fahrzeug (40) das Behälterhandhabungsfahrzeug (301) von mindestens drei Seiten umschließt, wenn ein fehlerhaftes Behälterhandhabungsfahrzeug (301) in der Öffnung angeordnet ist.

11. Fahrzeug (40) nach einem der Ansprüche 9, ferner umfassend eine Hubanordnung zum Anheben des Behälterhandhabungsfahrzeugs (301) von dem Schienensystem (108) weg, optional wobei die Hubanordnung mindestens zwei Hubmechanismen (53) umfasst, die an gegenüberliegenden Seiten der Öffnung (54) angeordnet sind, und wobei jeder der Hubmechanismen (54) Mittel umfasst, um eine Verbindungsschnittstelle (310, 311) des Behälterhandhabungsfahrzeugs (301) in Eingriff zu nehmen, wenn das Behälterhandhabungsfahrzeug (301) in der Öffnung (54) angeordnet ist.

12. Fahrzeug (40) nach einem der vorhergehenden Ansprüche, wobei das Fahrzeug (40) eine Reinigungsanordnung umfasst, die mindestens eine Reinigungsvorrichtung (44a, 44b) zum Reinigen der Schienen (110a,b, 111a,b) in der ersten Richtung (X) oder der zweiten Richtung (Y) umfasst.

13. Fahrzeug (40) nach einem der vorhergehenden Ansprüche, wobei das Fahrzeug (40) Kommunikationsmittel zur Kommunikation mit einem Steuersystem (500) umfasst.

14. Automatisiertes Ein- und Auslagersystem, umfassend ein zweidimensionales Schienensystem, das einen ersten Satz paralleler Schienen, die zum Führen einer Bewegung von Behälterhandhabungsfahrzeugen in einer ersten Richtung X über die Oberseite einer Rahmenstruktur angeordnet sind, und einen zweiten Satz paralleler Schienen umfasst, die senkrecht zu dem ersten Satz Schienen angeordnet sind, um die Bewegung der Behälterhandhabungsfahrzeuge in einer zweiten Richtung zu führen, die senkrecht zu der ersten Richtung verläuft, wobei das automatisierte Ein- und Auslagersystem ferner eine Anzahl von Behälterhandhabungsfahrzeugen (301) und mindestens ein Fahrzeug (40) nach einem der vorhergehenden Ansprüche 1 - 13 umfasst.

15. Verfahren zum Bewegen eines Fahrzeugs nach einem der vorhergehenden Ansprüche 1 - 13 auf einem Schienensystem eines automatisierten Ein- und Auslagersystems, wobei das Verfahren das Verwenden des Riemenantriebs zum Antreiben des Fahrzeugs und des ersten und des zweiten Satzes nicht motorisierter Führungsräder (42a, 42b) zum Führen des Fahrzeugs auf dem Schienensystem (108) umfasst.

## Revendications

1. Véhicule (40) pour fonctionnement sur un système automatisé de stockage et de récupération (1), le système automatisé de stockage et de récupération (1) comprenant un système de rails bidimensionnels (108) comprenant un premier ensemble de rails parallèles (110a,b) agencés pour guider le mouvement de véhicules de manipulation de conteneur (301) dans une première direction (X) par-dessus le haut d'une structure d'ossature (100), et un second ensemble de rails parallèles (111a,b) agencé perpendiculairement au premier ensemble de rails (110a,b) pour guider le mouvement des véhicules de manipulation de conteneur (301) dans une seconde direction (Y) qui est perpendiculaire à la première direction (X), où le véhicule (40) comprend une base à roues (2), dans lequel la base à roues comprend :
- un premier ensemble de roues de guidage non motorisées (42a) pour interaction avec les rails (110a,b) dans la première direction (X) et un second ensemble de roues de guidage non motorisées (42b) pour interaction avec les rails (111a,b) dans la seconde direction (Y) ; et
- un premier entraînement par courroie motorisé (43a) agencé pour contact par friction avec un rail (110a,b, 111a,b) du système de rails (108) pour entraîner le véhicule (40) dans l'une ou l'autre de la première direction (X) ou de la seconde direction (Y), **caractérisé en ce qu'**il comprend en outre un mécanisme de changement de voie (50) sur la base à roues (2) destiné à lever et à baisser un des ensembles de roues de guidage (42a, 42b) relativement à l'autre ensemble de roues de guidage (42b, 42a), et dans lequel le mécanisme de changement de voie (50) comprend une tringlerie mécanique (48) afin de lever et de baisser l'entraînement par courroie (43a, 43b) pour utilisation avec l'ensemble de roues de guidage (42a, 42b) associé au mécanisme de changement de voie (50).

2. Véhicule (40) selon la revendication 1, comprenant en outre un second entraînement par courroie motorisé (43b) agencé pour contact par friction avec un rail (110a,b, 111a,b) du système de rails (108) pour entraîner le véhicule (40) dans l'autre de la première direction (X) ou de la seconde direction (Y).

3. Véhicule (40) selon la revendication 1 ou 2, dans lequel le véhicule comprend un élément-plaque (49) relié à la tringlerie mécanique (48), et dans lequel l'entraînement par courroie (43a, 43b) est monté sur l'élément-plaque (49) de manière telle qu'un déplacement vertical de l'élément-plaque (49) par l'intermédiaire de la tringlerie mécanique (48) met en prise et met hors de prise l'entraînement par courroie (43a, 43b) relativement au système de rails (108).

4. Véhicule (40) selon la revendication 3, comprenant en outre un nombre de roues-poulies (41a, 41b) montées sur l'élément-plaque (49), dans lequel les roues-poulies (41a, 41b) ont un axe de rotation dans un plan horizontal, et dans lequel le premier entraînement par courroie motorisé (43a, 43b) est guidé autour des poulies (41a, 41b), de manière telle que, lorsque le véhicule (40) fonctionne sur un système de rails (108), l'entraînement par courroie (43a, 43b) s'étend parallèlement à la surface supérieure par rapport au premier ou second ensemble de rails parallèles (110a,b ; 111a,b).

5. Véhicule (40) selon la revendication 4, dans lequel le véhicule (40) comprend en outre une roue-galet tendeuse (41c) montée sur l'élément-plaque (49), et dans lequel l'entraînement par courroie (43a, 43b) est guidé autour de ladite roue-galet tendeuse (41c) et des roues-poulies (41a, 41b).

6. Véhicule (40) selon la revendication 4 ou 5, dans lequel le véhicule (40) comprend en outre un moteur d'entraînement par courroie (45), et dans lequel le moteur d'entraînement par courroie (45) est monté sur l'élément-plaque (49).

7. Véhicule (40) selon de quelconques des revendications précédentes 4 à 6, dans lequel le nombre de roues-poulies (41a, 41b) sont de la même taille que les premier et second ensembles de roues de guidage non motorisées (42a, 42b).

8. Véhicule (40) selon de quelconques des revendications précédentes 4 à 7, dans lequel l'élément-plaque (49), le nombre de roues-poulies (41a, 41b), la roue-galet tendeuse (41c), l'entraînement par courroie (43a, 43b) et le moteur d'entraînement par courroie (45) forment une unité d'entraînement par courroie.

9. Véhicule (40) selon la revendication 2, dans lequel l'au moins un entraînement par courroie (43a) dans la première direction (X) et/ou l'au moins un entraînement par courroie (43b) dans la seconde direction (Y) sont agencés à l'intérieur d'une zone horizontale de la base à roues (2) dans la première direction (X) et la seconde direction (Y).

10. Véhicule (40) selon de quelconques des revendications précédentes, dans lequel la base à roues (2) comprend une ouverture (54) destinée à recevoir un véhicule de manipulation de conteneur (301) qui a été en mauvais fonctionnement ou nécessite un entretien, et facultativement, lorsqu'un véhicule de manipulation de conteneur en mauvais fonctionnement (301) est agencé à l'intérieur de l'ouverture, le véhicule (40) encercle le véhicule de manipulation de conteneur (301) depuis au moins trois côtés.

11. Véhicule (40) selon de quelconques des revendications 9, comprenant en outre un agencement de levage destiné à lever le véhicule de manipulation de conteneur (301) à partir du système de rails (108), facultativement, dans lequel l'agencement de levage comprend au moins deux mécanismes de levage (53) agencés sur des côtés opposés de l'ouverture (54) et dans lequel chacun des mécanismes de levage (54) comprend des moyens destinés à entrer en prise avec une interface de liaison (310, 311) du véhicule de manipulation de conteneur (301) lorsque le véhicule de manipulation de conteneur (301) est agencé dans l'ouverture (54).

12. Véhicule (40) selon de quelconques des revendications précédentes, dans lequel le véhicule (40) comprend un agencement de nettoyage comprenant au moins un dispositif de nettoyage (44a, 44b) destiné à nettoyer les rails (110a,b, 111a,b) dans la première direction (X) ou la seconde direction (Y).

13. Véhicule (40) selon de quelconques des revendications précédentes, dans lequel le véhicule (40) comprend des moyens de communication pour communication avec un système de commande (500).

14. Système automatisé de stockage et de récupération, comprenant un système de rails bidimensionnels comprenant un premier ensemble de rails parallèles agencés pour guider le mouvement de véhicules de manipulation de conteneur dans une première direction X par-dessus le haut d'une structure d'ossature, et un second ensemble de rails parallèles agencé perpendiculaire au premier ensemble de rails pour guider le mouvement des véhicules de manipulation de conteneur dans une seconde direction qui est perpendiculaire à la première direction, dans lequel le système automatisé de stockage et de récupération comprend en outre un nombre de véhicules de manipulation de conteneur (301) et au moins un véhicule (40) selon de quelconques des revendications précédentes 1 à 13.

15. Procédé de mouvement d'un véhicule selon de quelconques des revendications précédentes 1 à 13 sur un système de rails d'un système automatisé de stockage et de récupération, dans lequel le procédé comprend l'utilisation de l'entraînement par courroie pour entraîner le véhicule et des premier et second ensembles de roues de guidage non motorisées (42a, 42b) pour guider le véhicule sur le système de rails (108).
